# EUROPÄISCHE PATENTSCHRIFT

(11) **EP 3 559 502 B1**
(45) Veröffentlichungstag und Bekanntmachung des Hinweises auf die Patenterteilung: **20.01.2021**
(21) Anmeldenummer: 17838034.1
(22) Anmeldetag: 12.12.2017
(51) Int. Cl.: F16F 15/32, F16F 15/315, G01M 1/36, F16F 15/36

(54) **ENERGIESPEICHER**
ENERGY ACCUMULATOR
ACCUMULATEUR D'ÉNERGIE

(30) Priorität: 20.12.2016 DE 102016125024
(43) Veröffentlichungstag der Anmeldung: 30.10.2019
(73) Patentinhaber: Reinelt, Markus, 49123 Georgsmarienhütte (DE)
(72) Erfinder: Reinelt, Markus, 49123 Georgsmarienhütte (DE)
(74) Vertreter: Deters, Frank
(86) Internationale Anmeldenummer: PCT/EP2017/082448
(87) Internationale Veröffentlichungsnummer: WO 2018/114485

(56) Entgegenhaltungen:
- WO-A1-98/43341
- DE-A1- 3 102 726
- DE-A1- 4 025 354
- DE-A1-102005 044 123
- DE-U1- 29 705 327

## Beschreibung

Die Erfindung betrifft einen Energiespeicher nach dem Oberbegriff des Patentanspruchs 1.

Ein derartiger Energiespeicher ist beispielsweise aus der DE 40 25 354 bekannt. Der Energiespeicher umfasst eine Schwungscheibe, die auf einem Luftpolster gelagert ist. Die Schwungscheibe ist dabei in einer Wanne um eine vertikale Drehachse rotierbar angeordnet. Der Bereich unterhalb der Schwungscheibe ist durch eine Labyrinthdichtung von einem Bereich oberhalb der Schwungscheibe abgetrennt. Die Labyrinthdichtung ist dabei als Halb-Labyrinthdichtung ausgeführt, die eine gegenüber einer Voll-Labyrinthdichtung gleicher Länge eine geringere Dichtwirkung aufweist.

Die Schwungscheibe eines solchen Energiespeichers muss eine gleichmäßige Gewichtsverteilung aufweisen, um eine zum Wannenboden parallele Ausrichtung der Schwungscheibe im abgehobenen Zustand zu gewährleisten und ein Verkanten der Schwungscheibe innerhalb der Wanne zu vermeiden. Die Schwungscheibe wird für den Betrieb des Energiespeichers in Rotation versetzt. Für einen gleichmäßigen Lauf ist eine unwuchtarme Schwungscheibe notwendig. Bei sehr großen und/oder sehr schweren Schwungscheiben, die unter Umständen erst am Ort des Energiespeichers erstellt werden, ist das Auswuchten sehr aufwendig.

Aus der DE 10 2005 044 123 A1 ist eine Energiespeichervorrichtung in Form eines Schwungrades beschrieben, das einen Schwimmkörper mit rotationssymmetrischer Außenfläche aufweist, der um seine Rotationsachse drehbar und in Wasser schwimmend gelagert ist. Beim Bau des Schwungrandes wird mittels geeigneter Sensoren etwaige Unwuchten gemessen, welche schrittweise ausgeglichen werden. Auch eine automatisch laufende Unwuchtkorrektur wird als Option beschrieben. Die DE 31 02 726 A1 beschreibt ein Lüfterrad, das über eine Welle in Rotation versetzt werden kann. Zum dynamischen Auswuchten der Welle wird eine Flüssigkeit, die zumindest teilweise von einem konzentrisch um die Drehachse des Lüfterrades angeordnete Vorratsbehälter gezielt in einzelne über das Lüfterrad verteilte, flüssigkeitsleitend mit dem Vorratsbehälter verbundene Außenbehälter verbracht. Die Vorrichtung umfasst hydraulische und elektrische Leitungen, die entlang der Welle sich mit einem außerhalb des Lüfterrades befindlichen Behälter und einer Steuervorrichtung verbunden sind.

Der Erfindung liegt die Aufgabe zugrunde, einen Energiespeicher der eingangs genannten Art bereitzustellen, der vorgenannte Nachteile vermeidet.

Diese Aufgabe wird in Verbindung mit dem Oberbegriff des Patentanspruchs 1 erfindungsgemäß dadurch gelöst, dass die Schwungscheibe eine automatische Auswuchtvorrichtung aufweist, die mindestens eine in radialer Richtung sowie in Rotationsrichtung der Schwungscheibe positionierbare Ausgleichsmasse, ein Messsystem zur Detektion einer Unwucht sowie ein mit dem Messsystem verbundenes Steuerungssystem zu Ermittlung geeigneter Ausgleichspositionen und zur Steuerung der Positionierung der Ausgleichsmasse umfasst.

Im Energiespeicher wird eine Druckdifferenz zwischen einem ersten, überwiegend an der dem Wannenboden zugewandten Seite der Schwungscheibe angeordneten Bereich und einem weiteren, überwiegend auf der gegenüberliegenden Seite der Schwungscheibe angeordneten Bereich angelegt. Die Druckdifferenz wird dabei durch eine Fluidenergiemaschine erzeugt. Die Druckdifferenz bewirkt eine Kraft auf die Schwungscheibe, die diese vom Wannenboden abhebt. Die zunächst nichtrotierende Schwungscheibe wird in Rotation versetzt, wobei die Schwungscheibe durch das Messsystem auf die Mani-festation einer Unwucht überwacht wird. Ein mit dem Messsystem verbundenes Steuerungssystem ermittelt geeignete Ausgleichspositionen der Ausgleichsmasse und steuert deren Positionierung. Dieser Prozess kann bis zum Erreichen einer Betriebsdrehzahl der Schwungscheibe fortgesetzt werden. Durch kontinuierliche Überwachung und Anpassung der Position der Ausgleichsmasse wird ein unwuchtarmer Betrieb der Schwungscheibe sichergestellt.

Anschließend kann die Ausgleichsmasse gegebenenfalls an der so als optimal ermittelten Position dauerhaft festgelegt werden.

Mit Vorteil ist die Ausgleichsmasse an einem relativ zur Schwungscheibe um deren Drehachse drehbar positionierbaren Führungssystem festgelegt und die Ausgleichsmasse entlang des Führungssystems in radialer Richtung der Schwungscheibe positionierbar. Die Ausgleichsmasse nimmt dabei die Form eines Ausgleichsgewichts an. Dieses ist an einem Führungssystem festgelegt, womit es an unterschiedlichen Positionen relativ zur Schwungscheibe festgelegt werden kann. Das Ausgleichsgewicht kann somit an eine bestimmte Position verbracht werden, um eine Unwucht der Schwungscheibe zu reduzieren. Das Ausgleichsgewicht kann, wenn es in eine geeignete Ausgleichsposition verbracht worden ist, an dem Führungssystem dauerhaft festgelegt werden.

In einer alternativen Ausgestaltung des Energiespeichers ist die Ausgleichsmasse von einer Flüssigkeit gebildet, die zumindest teilweise von einem konzentrisch um die Drehachse der Schwungscheibe angeordneten Vorratsbehälter gezielt in einzelne über die Schwungscheibe verteilte, flüssigkeitsleitend mit dem Vorratsbehälter verbundenen Außenbehälter verbringbar ist. Die Ausgleichsmasse wird hier von einer Flüssigkeit gebildet, die mittels Pumpen aus einem zentralen Vorratsbehälter in weitere Behälter verbracht werden kann, die über die Schwungscheibe verteilt sind. Die Behälter können dabei auf der Oberfläche der Schwungscheibe angebracht und/oder in die Oberfläche der Schwungscheibe eingelassen und/oder im Inneren der Schwungscheibe angeordnet sein. Die Behälter sind flüssigkeitsleitend mit dem zentralen Vorratsbehälter verbunden. Durch die Verwendung von Flüssigkeit kann die Masse, die in die über der Schwungscheibe verteilten Außenbehälter verbracht wird, sehr genau eingestellt werden. Hierdurch ist ein unwuchtarmer Betrieb der Schwungscheibe zu erreichen.

In einer vorteilhaften Ausführung sind in der Wanne über den Umfang verteilte Führungs- und Dämpfungssysteme angeordnet, wobei die Führungs- und Dämpfungssysteme je einen in Richtung der Schwungscheibe verschiebbaren Kolben aufweisen, der an seinem der Schwungscheibe abgewandten Ende federn gelagert ist und eine Dämpfungsanordnung aufweist. Die Schwungscheibe hat in einer wellen- bzw. nabenlos ausgeführten Form keine zur Wanne festgelegte Drehachse. Für die Verwendung von besonders großen oder besonders schweren Schwungscheiben wird auf die Verwendung von Naben bzw. Wellen verzichtet, da diese die entsprechend großen Lasten, die sich ergeben, wenn die Druckdifferenz nicht aufrechterhalten wird, nur schwer aufnehmen können. Bevorzugt wird daher in einem Zustand, in dem keine Druckdifferenz zwischen dem ersten und dem weiteren Bereich herrscht, die Schwungscheibe auf dem Wannenboden aufliegen. In einem solchen Fall ist jedoch trotzdem eine Führung der rotierenden Schwungscheibe innerhalb der Wanne notwendig. Diese Führung wird durch im Umfang der Wanne verteilte Führungs- und Dämpfungssysteme gewährleistet. Die Kolben des Feder- und Dämpfungssystems können beispielsweise durch die Eingabe eines Fluides wie Wasser oder Luft in Richtung der Schwungscheibe verschoben werden. Wenn die Schwungscheibe sich im Betrieb relativ zur Wanne bewegt und sich der Wand nähert, kommt der Rand der Schwungscheibe mit dem Kolben des in der Wanne angeordneten Führungs- und Dämpfungssystems in Kontakt, der daraufhin einfedern kann. Die Energie wird dabei vom Dämpfungssystem aufgenommen. Das Dämpfungssystem absorbiert somit die Energie, die sich aus der Bewegung der Schwungscheibe ergibt und bewegt diese durch die federnde Lagerung zurück in ihre normale Position innerhalb der Wanne.

Mit Vorteil weist die Dämpfungsanordnung eine Fluidzuführung auf, durch die die Dämpfung einstellbar ist. Hierdurch kann auf unterschiedliche Zustände der Schwungscheibe reagiert werden. Wenn es zu besonders häufigen und heftigen Berührungen der Schwungscheibe mit dem Führungs- und Dämpfungssystem kommt, kann die Dämpfungswirkung beispielsweise entsprechend erhöht werden.

In einer weiteren besonders vorteilhaften Ausführung weist der Kolben an seinem der Schwungscheibe zugewandten Ende eine Gleitfläche auf. Die Gleitfläche ermöglicht ein Gleiten der Oberfläche der rotierenden Schwungscheibe über den Kolben des Federungs- und Dämpfungssystems. Die Gleitfläche ist dabei vorteilhafterweise aus einem reibungsmindernden und verschleißfesten Material gefertigt. Als Material kommen hier Fluorpolymere wie z.B. Teflon oder keramische Beläge oder Hartmetallflächen in Frage. Hierdurch wird die Reibung zwischen der Schwungscheibe und dem Kolben vermindert und die Lebensdauer des Energiespeichers erhöht.

In einer besonders vorteilhaften Ausführung ist die Gleitfläche über eine Fluidzuleitung mit einem Fluid überströmbar ausgebildet. Das Fluid kann dabei eine Flüssigkeit wie Öl oder ein Gas oder Gasgemisch wie Luft sein. Das Überströmen der Gleitfläche mit einem Fluid dient der weiteren Minderung der Reibung, wenn es zu einem Kontakt mit der Schwungscheibe kommt sowie zur Abfuhr der aus der Reibung entstehenden Reibungswärme, also zur Kühlung der Gleitfläche. In einer besonders vorteilhaften Ausgestaltung erfolgt die Zuführung im Inneren des Kolbens, wobei das Fluid über Löcher in der Gleitfläche austritt und sich über die Gleitfläche verteilt.

In einer alternativen vorteilhaften Ausgestaltung weist der Kolben an seinem der Schwungscheibe zugewandten Ende einen drehbar gelagerten Wälzkörper auf. Hier erfolgt die Führung der Schwungscheibe durch den Kolben über den am Ende des Kolbens angelagerten Wälzkörper. Durch die Drehung des Wälzkörpers wird eine Reibung zwischen Kolben bzw. Wälzkörper und Schwungscheibe vermieden oder zumindest vermindert. Entsprechend werden Reibungverluste und damit Reibungswärme vermindert bzw. vermieden. Der Wälzkörper kann z.B. als zylindrische Walze oder als Kugel ausgeformt sein.

Mit Vorteil weist die Dichtanordnung des Energiespeichers eine an der Schwungscheibe festgelegte Dichtschürze auf. Diese Dichtschürze dient dazu, den ersten überwiegend an der dem Wannenboden zugewandten Seite der Schwungscheibe angeordneten Bereich von einem weiteren überwiegend auf der dem ersten Bereich gegenüberliegenden Seite der Schwungscheibe angeordneten Bereich abzugrenzen. Die Dichtschürze ist dabei bevorzugt an der Unterseite oder am Umfang der Schwungscheibe angeordnet und steht im Kontakt mit dem Wannenboden. Der Wannenboden weist eine zur Dichtschürze korrespondierende Dichtungsfläche auf. Diese kann mit einer abriebfesten und reibungsmindernden Auflage versehen sein. Diese Auflage kann z.B. aus polymeren Materialien wie Fluorpolymeren z.B. Teflon oder aus keramischen Material oder Metall bestehen. Bei einem Anlegen einer Druckdifferenz zwischen dem ersten und dem weiteren Bereich wird in dem Bereich, der durch die Dichtschürze abgegrenzt ist, ein Fluid wie beispielsweise ein Gas wie Helium oder Stickstoff oder auch ein Gasgemisch wie Luft eingebracht werden. Auch das Einbringen einer Flüssigkeit wie Öl oder Wasser sind denkbar. Die Schürze dient insbesondere zum Abdichten des ersten Bereiches gegenüber dem weiteren Bereich beim Anfahren des Energiespeichers, wenn die Schwungscheibe durch Anlegen einer Druckdifferenz und die daraus resultierende Kraft vom Boden abgehoben wird, bevor die Schwungscheibe in Rotation versetzt wird.

Mit Vorteil weist der Energiespeicher eine zu der vorgenannten Dichtanordnung ergänzende weitere oder alternative Dichtanordnung auf. Diese umfasst eine an der Schwungscheibe angeordnete flexible Dichtlippe und ein an der Wanne angeordnete korrespondierendes Dichtelement, wobei die Dichtlippe ein erstes an der Schwungscheibe festgelegtes Ende und ein weiteres Ende aufweist, das aus einer Ruheposition durch eine in einem Betriebszustand der Schwungscheibe wirkende Zentrifugalkraft in eine Dichtposition überführbar ist, in der das weitere Ende der Dichtlippe mit dem Dichtelement in Kontakt tritt. Der Betriebszustand der Schwungscheibe ist hierbei durch eine für den Betrieb als Energiespeicher notwendige minimale Umlaufgeschwindigkeit gekennzeichnet. Ab dieser minimalen Umlaufgeschwindigkeit im Betriebszustand wirkt auf die Dichtlippe eine ausreichend große Zentrifugalkraft, um das weitere Ende in Kontakt mit dem Dichtelement zu bringen. Diese Dichtanordnung ist also erst im Betriebszustand dichtend. Für das Anheben der Scheibe und das Beginnen der Phase, in der die Schwungscheibe in Rotation versetzt wird, ist somit wenigstens eine weitere Dichtanordnung von Nöten. Die Dichtlippe ist bevorzugt aus einem Polymermaterial gefertigt.

In einer besonders bevorzugten Ausführungsform bildet die Dichtlippe mit dem weiteren Ende in der Dichtposition die Form der Mantelfläche eines Kegelstumpfes aus. Die Dichtlippe weist hierzu am ersten an der Schwungscheibe festgelegten Ende einen geringeren Durchmesser auf als das weitere Ende. Die Länge der Dichtlippe ist dabei allerdings länger als die Differenz der beiden Durchmesser. Die Schwungscheibe erhält, wenn sie in Rotation versetzt wird, durch die Dichtlippe eine Art fliegenden Rock. In der Dichtposition kommt die Dichtlippe in Form der Mantelfläche eines Kegelstumpfes mit einem entsprechend ausgebildeten Dichtelement an der Wanne in einen abdichtenden Zustand.

In einer besonders bevorzugten Ausführungsform weist die Dichtlippe an ihrem weiteren Ende eine Beschwerung durch Gewichte auf. Durch die Beschwerung des weiteren Endes der Dichtlippe wird diese straff gezogen und durch die Einwirkung der Zentrifugalkraft in Richtung des korrespondierenden Dichtelementes bewegt. Die Zuverlässigkeit, mit der die Dichtlippe im Betrieb ihre Dichtposition einnimmt, wird erhöht. Bevorzugt sind die Gewichte als Gleitelemente mit einer verschleißfesten und reibungsmindernden Oberfläche ausgestaltet.

Mit Vorteil weist der Energiespeicher eine zu den vorgenannten Dichtanordnungen ergänzende weitere oder alternative Dichtanordnung auf. Diese umfasst einen an der Wanne angeordneten umlaufenen Schlauch, wobei der Schlauch durch ein Fluid expandierbar ist. Der Schlauch bildet dabei eine umlaufende Dichtung. Durch das Expandieren des Schlauches mit einem Fluid kann die Abdichtungswirkung der Dichtanordnung auf ein benötigtes Maß eingestellt werden. Die Dichtung ist somit anpassbar. Dies erhöht die Betriebssicherheit des Energiespeichers. In einer bevorzugten Ausführungsform weist diese Dichtanordnung eine an der Schwungscheibe angeordnete Dichtfläche und ein den Schlauch aufnehmendes an der Wanne angeordnetes Gehäuse auf, das den Schlauch zumindest an seinen nicht zur Dichtfläche weisenden Teilen der Schlauchoberfläche in seiner Ausdehnung beschränkt. Das Gehäuse umfasst zumindest weite Teile des Schlauches und beschränkt ihn dort in seiner Ausdehnung. Somit lässt das Gehäuse ein Ausdehnen des Schlauches beim Befüllen mit einem Fluid weitgehend nur in Richtung der an der Schwungscheibe angeordneten Dichtfläche zu. Das Gehäuse dient somit der Führung eines expandierenden Schlauches. Dadurch kann der Einsatz an Fluid, das zum Expandieren des Schlauches dient, reduziert werden. Zudem wird die Führung des Schlauches verbessert. Dies verbessert die Lebensdauer der Dichtanordnung und damit des Energiespeichers.

In einer besonders vorteilhaften Ausgestaltung weist der Schlauch an seiner der Dichtfläche zugewandten Schlauchoberfläche in Umfangsrichtung verlaufende, der Schwungscheibe zugewandte Lamellen auf. Diese Lamellen sind aus einem abriebfesten und reibungsmindernden Material gefertigt. Hier kommen insbesondere polymere Werkstoffe wie Fluorpolymere in Betracht. Beim Kontakt zwischen Schlauch und Dichtfläche kommt es damit nur zu einer lokalen Berührung im Bereich der Lamellen. Die Lamellen stellen zudem für einen an der Dichtanordnung vorbeitretendes Fluid ein Strömungshindernis dar, durch das die Dichtwirkung der Anordnung verbessert werden kann. Ein an der Dichtfläche vorbeiströmendes Fluid kann dazu beitragen, Reibungswärme abzutransportieren.

Mit Vorteil weist der Energiespeicher eine zu den vorgenannten Dichtanordnungen ergänzende weitere oder alternative Dichtanordnung auf. Diese umfasst eine einenends an der Wannenwandung festgelegte Trennschürze. Anderenends ist an der Trennschürze eine Gleitplatte festgelegt, die in Kontakt mit einem an der Schwungscheibe angeordneten Dichtareal bringbar ist. Bevorzugt weist die Gleitplatte eine Oberfläche aus einem reibungsmindernden und abriebfesten Material auf. Die Trennschürze ist bevorzugt aus einem flexiblen Material gefertigt.

In einer bevorzugten Ausgestaltung ist die Gleitplatte, insbesondere über ein Federsystem, mit eine Kraft in Richtung des Dichtareals beaufschlagbar. Bevorzugt ist das Federsystem wie die Trennschürze an der Wannenwandung angeordnet. Hierdurch wird ein Anliegen der Gleitplatte und somit eine zuverlässige Dichtwirkung der Dichtanordnung sichergestellt.

In einer besonders bevorzugten Ausgestaltung ist die auf die Gleitplatte aufgebrachte Kraft über eine Einstellvorrichtung regulierbar. Insbesondere ist die Einstellvorrichtung mechanisch oder hydraulisch betätigbar. Durch die Einstellbarkeit der Kraft kann eine zuverlässige Dichtwirkung unter Verminderung der auftretenden Reibkräfte erzielt werden. Bevorzugt ist die Einstellvorrichtung in Reihe mit einem Federsystem angeordnet.

Mit Vorteil weist der Energiespeicher wenigstens zwei der vorgenannten Dichtanordnungen auf, die zueinander beabstandet angeordnet sind und zwischen denen im Betriebszustand der Schwungscheibe ein Raum ausgebildet ist, in den ein Sperrmedium einbringbar ist. Der Betriebszustand ist wiederum gekennzeichnet durch eine Mindestrotationsgeschwindigkeit, die notwendig ist zum Betrieb als Energiespeicher. Diese Mindestrotationsgeschwindigkeit ist abhängig von Masse, Durchmesser, Volumen und Dichte der Schwungscheibe des Energiespeichers. Das Sperrmedium kann beispielsweise das Fluid sein, das den Bereich zwischen Schwungscheibe und Wanne ausfüllt und auf dem die Schwungscheibe gelagert ist. Das Fluid, das in den als Sperrmedium in den Raum zwischen den voneinander beabstandeten Dichtanordnung eingebracht wird, weist einen höheren Druck auf als der Druck in dem ersten Bereich unterhalb der Schwungscheibe. Das Sperrmedium unterstützt somit die Wirkung der Dichtung, in dem zwischen den beiden Dichtanordnungen ein Überdruck gegenüber dem Druck im ersten Bereich besteht und somit ein Austreten von Fluid aus dem ersten Bereich weitgehend vermieden wird.

In einer weiteren vorteilhaften Ausführungsform weist der Energiespeicher eine zu den vorgenannten Dichtanordnungen ergänzende weitere oder alternative Dichtanordnung auf. Diese umfasst eine Labyrinthdichtung mit einem an der Wanne angeordnetem Wandteil und einem an der Schwungscheibe angeordnetem Schwungscheibenteil, wobei der Wandteil und der Schwungscheibenteil jeweils parallel zur Drehachse der Schwungscheibe verlaufende Stolperbünde aufweisen, die miteinander in berührungslosen Eingriff bringbar sind. Eine solche Voll-Labyrinthdichtung bietet eine sehr gute Dichtwirkung für eine berührungslose Dichtung. Durch die berührungslose Ausführung werden Reibungsverluste durch die Dichtanordnung minimiert. Parallel zur Drehachse der Schwungscheibe ausgeführte Stolperbünde ermöglichen das Anheben und Absenken der Schwungscheibe ohne Risiko einer gegenseitigen Beschädigung der Stolperbünde durch Berührung.

In einer besonders bevorzugten Ausgestaltung ist ein Sperrmedium zwischen die Stolperbünde der Labyrinthdichtung einbringbar. Bevorzugt weist das Wandteil der Labyrinthdichtung entsprechende Leitungen für das Sperrmedium auf. Durch den Einsatz eines Sperrmediums, dass mit einem gegenüber dem Druck im ersten Bereich erhöhtem Druck eingebracht wird, wird die Dichtwirkung der Labyrinthdichtung weiter erhöht.

Die vorgenannten Dichtanordnungen können hierbei jeweils mit weiteren Dichtanordnungen der gleichen Art als auch in Kombination mit anderen vorgenannten Dichtanordnungen im Energiespeicher Verwendung finden.

Weitere Einzelheiten der Erfindung werden in den Figuren anhand von schematisch dargestellten Ausführungsbeispielen beschrieben. Es zeigen
Fig. 1 einen erfindungsgemäßen Energiespeicher in Übersichtsdarstellung, teilweise geschnitten,
Fig. 2. einen weiteren erfindungsgemäßen Energiespeicher in alterativer Ausführung in Übersichtsdarstellung, teilweise geschnitten,
Fig. 3 einen erfindungsgemäßen Energiespeicher nach Fig. 1 oder 2 in einer Ansicht von oben mit einer Auswuchtvorrichtung in einer Ausgangsposition,
Fig. 4 den erfindungsgemäßen Energiespeicher nach Fig. 3 in einer Ansicht von oben mit der Auswuchtvorrichtung in einer Auswuchtposition,
Fig. 5 einen erfindungsgemäßen Energiespeicher nach Fig. 1 oder 2 in einer Ansicht oben mit einer alternativen Auswuchtvorrichtung,
Fig. 6 den erfindungsgemäßen Energiespeicher nach Fig. 5 in einer Ansicht von oben im ausgewuchteten Zustand,
Fig. 7 ein Führungs- und Dämpfungssystem des erfindungsgemäßen Energiespeichers,
Fig. 8 ein Führungs- und Dämpfungssystem des erfindungsgemäßen Energiespeichers in einer alternativen Ausgestaltung mit Wälzkörper,
Fig. 9 eine Dichtanordnung des erfindungsgemäßen Energiespeichers mit Dichtschürze bei abgeschaltetem Energiespeicher
Fig. 10 die Dichtanordnung nach Fig. 9 dargestellt mit im Energiespeicher aufgebrachter Druckdifferenz,
Fig. 11 zwei alternative Dichtanordnungen des erfindungsgemäßen Energiespeichers mit Dichtlippen, dargestellt bei nicht-rotierender Schwungscheibe
Fig. 12 zwei alternative Dichtanordnungen nach Fig. 11, dargestellt im Betriebszustand der Schwungscheibe,
Fig. 13 zwei alternative Dichtanordnungen des erfindungsgemäßen Energiespeichers mit Schläuchen,
Fig. 14 zwei alternative Dichtanordnungen nach Fig. 13, wobei die Schläuche gegenüber Fig. 13 expandiert dargestellt sind,
Fig. 15 eine weitere alternative Dichtanordnung des erfindungsgemäßen Energiespeichers umfassend eine Trennschürze mit Gleitplatte,
Fig. 16 ein Dichtanordnung des erfindungsgemäßen Energiespeichers nach Fig. 15 mit Schwungscheibe in angehobenem Zustand
Fig. 17 einen erfindungsgemäßen Energiespeichers mit einer als Labyrinthdichtung ausgeführten Dichtanordnung
Fig. 18 eine Dichtanordnung des erfindungsgemäßen Energiespeichers nach

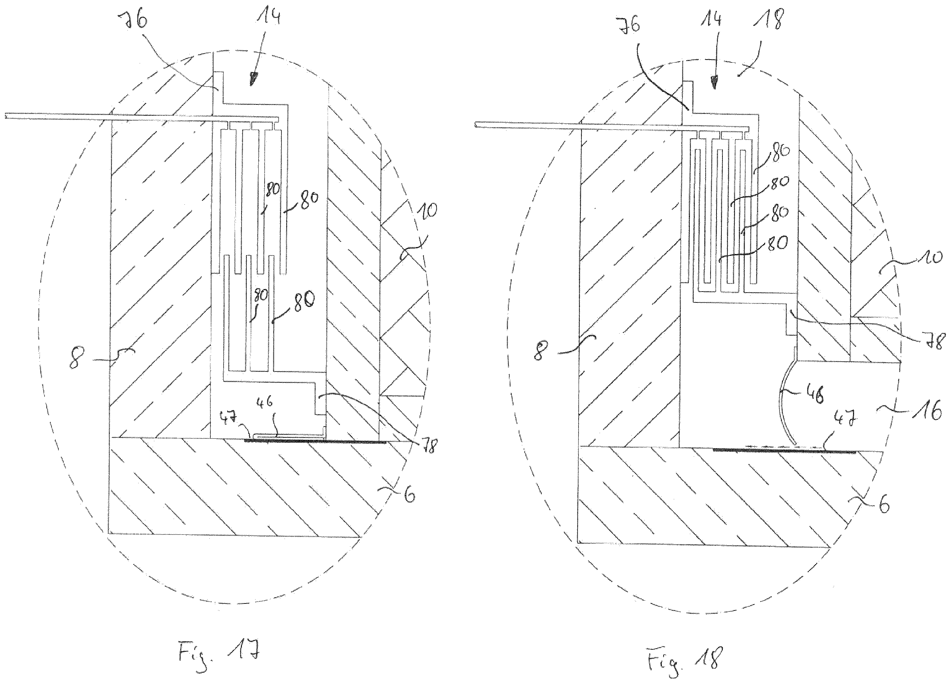

Fig. 17 mit Schwungscheibe in angehobenem Zustand

Nachfolgend werden gleichwirkende Elemente der Erfindung mit einer einheitlichen Bezugsziffer versehen, sofern dieses sinnvoll ist. Die nachfolgend beschriebenen Merkmale der Ausführungsbeispiele können auch in anderen Merkmalskombinationen, als dargestellt, Gegenstand der Erfindung sein.

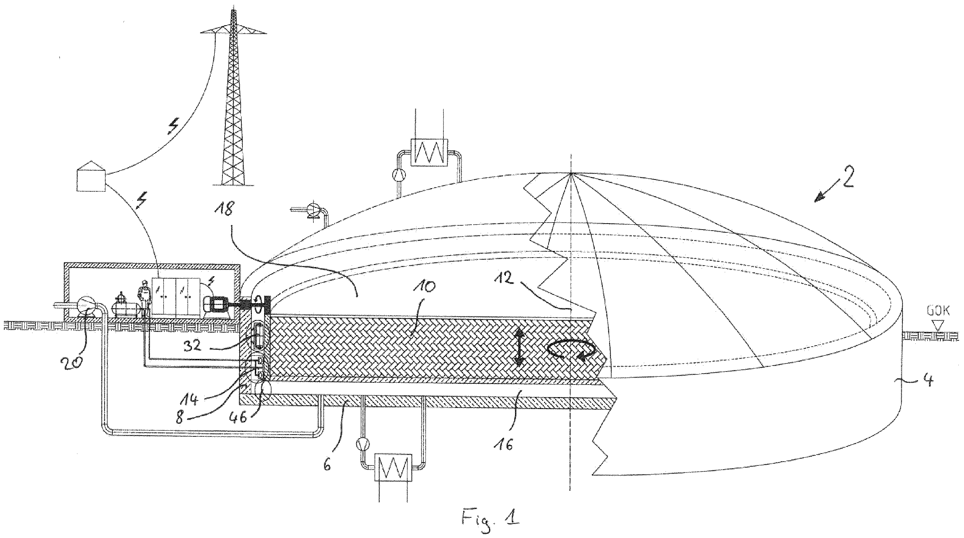

Fig. 1 zeigt einen Energiespeicher 2 mit einer Wanne 4 die einen Wannenboden 6 und eine Wannenwandung 8 umfasst. In der Wanne 4 ist eine Schwungscheibe 10 angeordnet, die um eine vertikale Drehachse 12 rotierbar angeordnet ist. Eine Dichtanordnung 14 trennt einen überwiegend an der dem Wannenboden 6 zugewandten Seite der Schwungscheibe 8 angeordneten ersten Bereich 16 von einem überwiegend auf der dem ersten Bereich gegenüberliegenden Seite der Schwungscheibe 8 angeordneten weiteren Bereich 18 ab. Die Schwungscheibe 8 ist durch eine Fluidenergiemaschine 20 durch Anlegen einer Druckdifferenz zwischen dem ersten Bereich 16 und dem weiteren Bereich 18 mit einer die Schwungscheibe 10 vom Wannenboden 6 abhebenden Kraft beaufschlagbar. Im vorliegenden Ausführungsbeispiel wird die Druckdifferenz durch die Erzeugung eines Überdrucks im ersten Bereich 16 gegenüber dem atmosphärischen Druck im weiteren Bereich 18 erzeugt. Weiterhin zeigt Fig. 1 ein an der Wannenwandung 8 angeordnetes Führungs- und Dämpfungssystem 32.

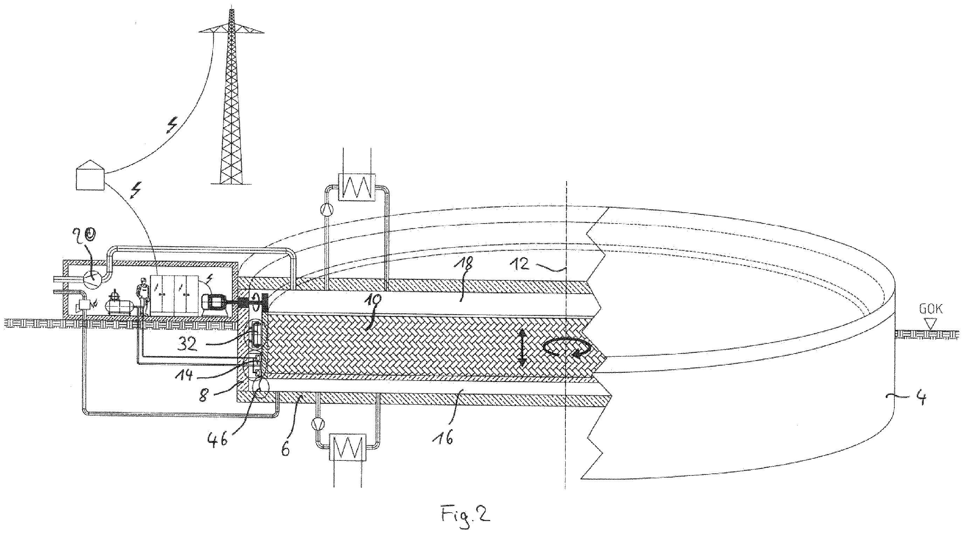

Fig. 2 zeigt einen Energiespeicher 2 in einer alternativen Ausführungsform. Die Wanne 4 ist hier gegen die Umgebung geschlossen ausgeführt. Die Druckdifferenz zwischen dem ersten Bereich 16 und dem weiteren Bereich 18 wird hier durch einen Unterdruck im weiteren Bereich 18 gegenüber dem Umgebungsdruck erreicht. Im ersten Bereich 16 herrscht dabei Umgebungsdruck oder ein gegenüber dem Umgebungsdruck verringerter Druck, der jedoch ausreichend groß ist, um gegenüber dem Druck im weiteren Bereich 18 die Schwungscheibe 10 vom Wannenboden 6 abzuheben.

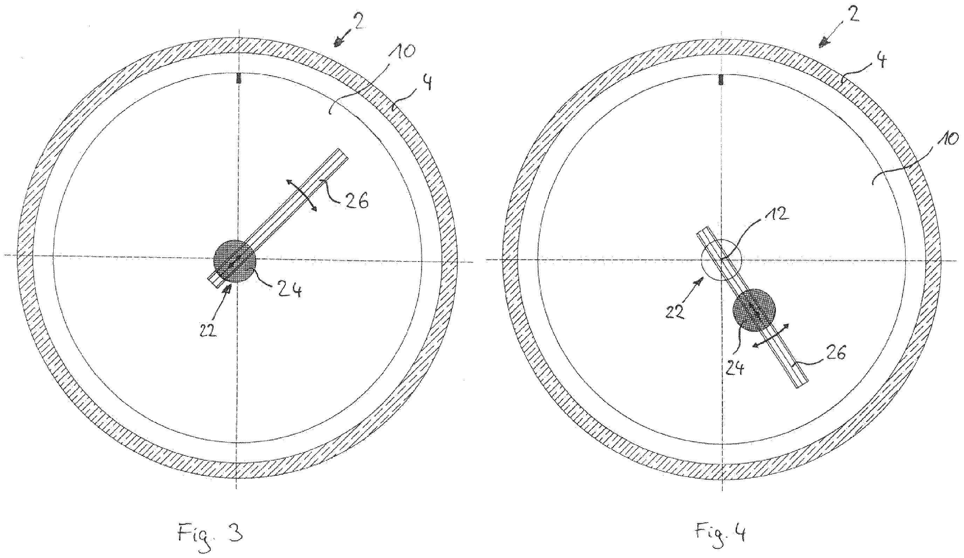

Fig. 3 zeigt den Energiespeicher 2 in einer Aufsicht. Eine Ausgleichsmasse 24 der automatischen Auswuchtvorrichtung 22 ist an einem Führungssystem 26 festgelegt. Das Führungssystem 26 ist um die Drehachse 12 der Schwungscheibe 10 drehbar. Die Ausgleichsmasse 24 ist entlang des Führungssystems 26 in radialer Richtung positionierbar. Insgesamt kann somit die Ausgleichsmasse 24 in eine zum Auswuchten der Schwungscheibe 10 geeignete Position verbracht werden

Fig. 4 zeigt den Energiespeicher 2 mit der automatischen Auswuchtvorrichtung 22, bei der die Ausgleichsmasse 24 in eine Auswuchtposition verbracht ist. Hierzu ist einerseits das Führungssystem 26 relativ zur Schwungscheibe 10 gedreht und die Ausgleichsmasse 24 entlang des Führungssystems 26 in Richtung des Randes der Schwungscheibe 10 versetzt worden.

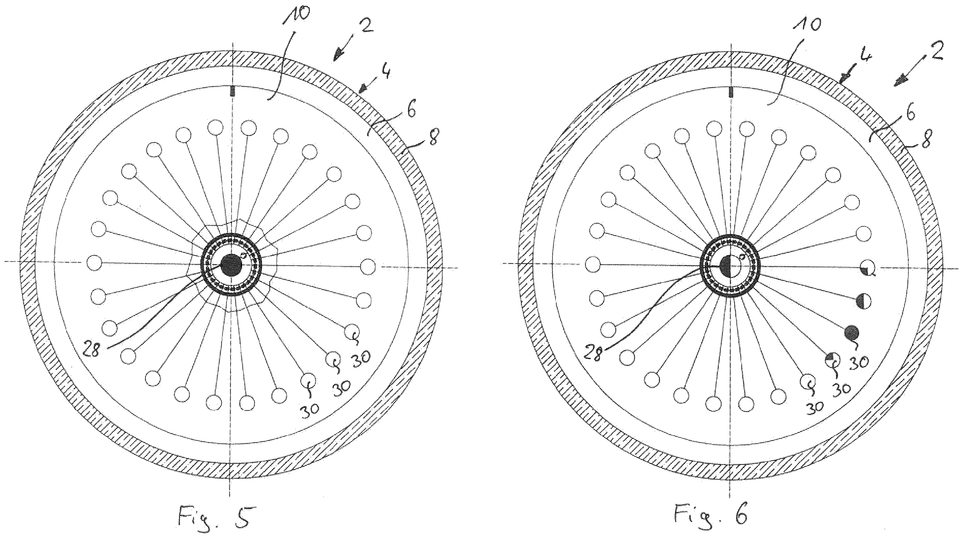

Fig. 5 stellt einen Energiespeicher 2 in der Aufsicht mit einer alternativen automatischen Auswuchtvorrichtung 22 dar. Hier ist die Ausgleichsmasse 24 von einer Flüssigkeit gebildet, die sich in einem konzentrisch zur Drehachse 12 der Schwungscheibe 10 angeordneten Vorratsbehälter 28 befindet. Von dem Vorratsbehälter 28 kann die Flüssigkeit in flüssigkeitsleitend mit dem Vorratsbehälter 28 verbundene Außenbehälter 30 verbracht werden. Hierzu weist die Auswuchtvorrichtung 22 mindestens eine Pumpe auf, mittels derer die Flüssigkeit gezielt in einzelne Außenbehälter 30 verbracht werden kann. Diese Außenbehälter 30 können dabei auch nur teilweise gefüllt werden.

Fig. 6 zeigt den Energiespeicher 2 aus Fig. 5 mit der automatischen Auswuchtvorrichtung 22, bei der die Flüssigkeit zum Auswuchten der Schwungscheibe teilweise aus dem Vorratsbehälter 28 in einzelne Außenbehälter 30 verbracht ist. Die Außenbehälter 30 weisen dabei unterschiedliche Füllstände auf.

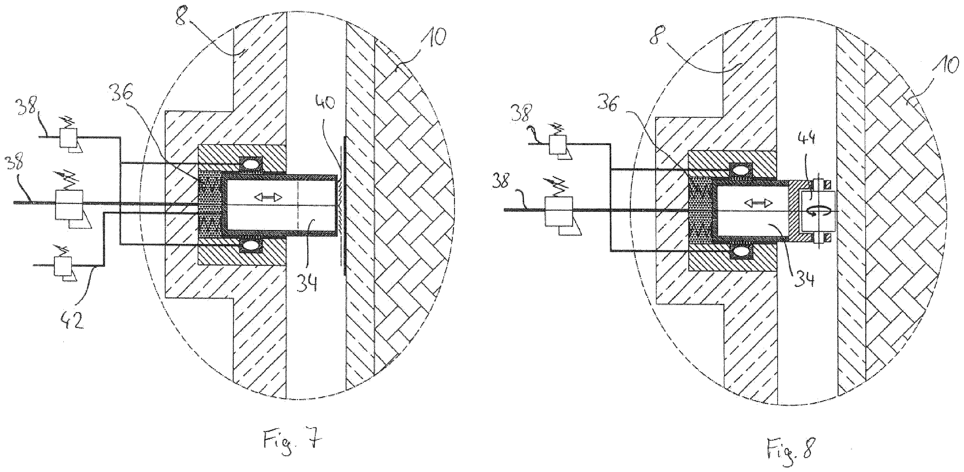

Fig. 7 zeigt ein Führungs- und Dämpfungssystem 32 in einer Detailansicht. Das Führungs- und Dämpfungssystem 32 umfasst einen Kolben 34 der federnd in einer Dämpfungsanordnung 36 angeordnet ist. Der Kolben 34 des Führungs- und Dämpfungssystems 32 ist dabei in Richtung der Schwungscheibe 10 verschiebbar. Die Dämpfungseigenschaften der Dämpfungsanordnung 36 sind über eine Fluidzuführung 38 einstellbar. Der Kolben 34 weist an seinem der Schwungscheibe 10 zugewandten Ende eine Gleitfläche 40 auf. Die Gleitfläche 40 ist über eine Fluidzuleitung 42 mit einem Fluid überströmbar ausgebildet. Die Gleitfläche 40 ist dabei bevorzugt aus einem verschleißfesten und reibungsmindernden Material gefertigt. Das Fluid, mit dem die Gleitfläche 40 überströmbar ist, dient der Reibungsminderung zwischen Gleitfläche 40 und Schwungscheibe 10. Weitere Funktionen des Fluids sind die bei Kontakt zwischen der Gleitfläche 40 und der Schwungscheibe 10 entstehende Reibungswärme abzutransportieren und die Gleitfläche 40 zu kühlen.

Fig. 8 zeigt ein alternatives Führungs- und Dämpfungssystem 32 mit einem Kolben 34, der in Richtung der Schwungscheibe 10 verschiebbar ist. Der Kolben 34 ist wiederum federnd gelagert und das Führungs- und Dämpfungssystem 32 weist eine Dämpfungsanordnung 36 auf, wobei die Dämpfungseigenschaften der Dämpfungsanordnung 36 über eine Fluidzuführung 38 eingestellt werden kann. In der alternativen Ausführungsform des Führungs- und Dämpfungssystems 32 weist der Kolben 34 an seinem der Schwungscheibe 10 zugewandten Ende einen Wälzkörper 44 auf. Hier ist dieser Wälzkörper 44 als Rolle ausgeführt. Der Wälzkörper 44 dient dazu, die Reibung beim Kontakt zwischen Schwungscheibe 10 und Führungs- und Dämpfungssystem 32 zu minimieren.

Das Führungs- und Dämpfungssystem 32 kommt insbesondere dann zum Einsatz, wenn eine sehr große und sehr schwere Schwungscheibe 10 Verwendung findet, die wellen- und nabenlos in der Wanne 4 angeordnet ist. Hierbei entfällt die übliche Führung über eine Welle der rotierenden Schwungscheibe 10, so dass das Führungs- und Dämpfungssystem 32 die Aufgabe der Führung der Schwungscheibe 10 in der Wanne 4 übernimmt.

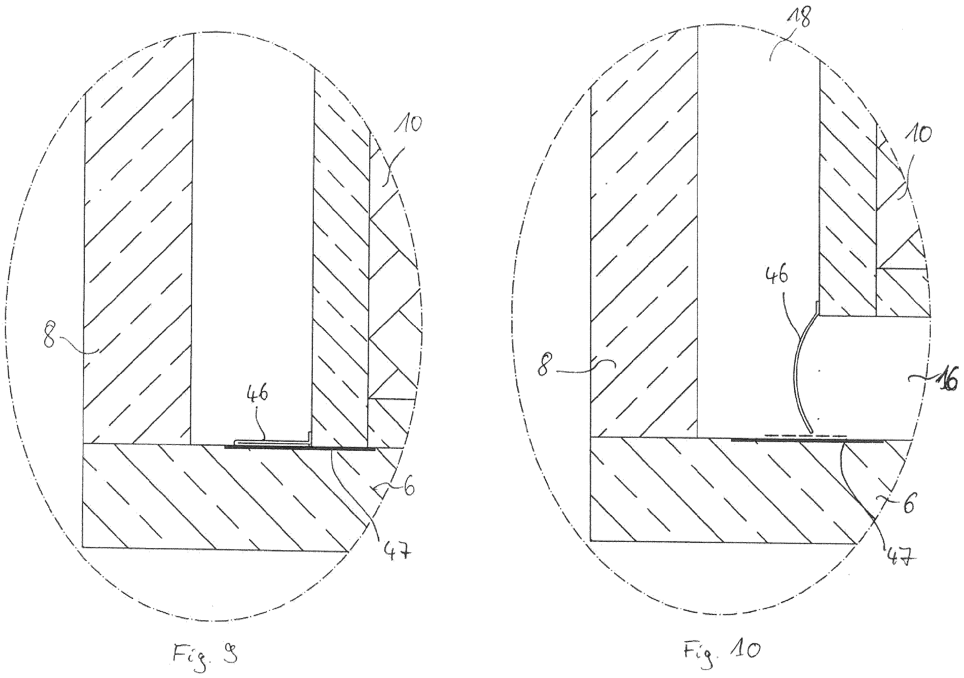

Fig. 9 zeigt eine Dichtanordnung 14 mit einer an der Schwungscheibe 10 festgelegten Dichtschürze 46. Die Schwungscheibe 10 liegt auf dem Wannenboden 6 auf. Die Schürze 46 befindet sich gefaltet neben der Schwungscheibe 10.

Fig. 10 zeigt eine Dichtanordnung 14, in der die Dichtschürze 46 den ersten Bereich 16 von dem weiteren Bereich 18 trennt. Am Wannenboden 6 ist eine zur Dichtschürze 46 korrespondierende Dichtungsfläche 47 angeordnet. Diese Dichtungsfläche 47 wird bevorzugt von einer abriebfesten und reibungsmindernden Auflage gebildet. Das freie Ende der Dichtschürze 46 kann mit der Dichtungsfläche 47 in Kontakt kommen. Eine abriebfeste und reibungsmindernde Auflage hilft, die Lebensdauer der Dichtanordnung 14 zu verlängern. Die Dichtschürze 46 ist in einer Position dargestellt, in der die Schwungscheibe 10 durch eine Druckdifferenz zwischen dem ersten Bereich 16 und dem weiteren Bereich 18 vom Wannenboden 6 abgehoben ist.

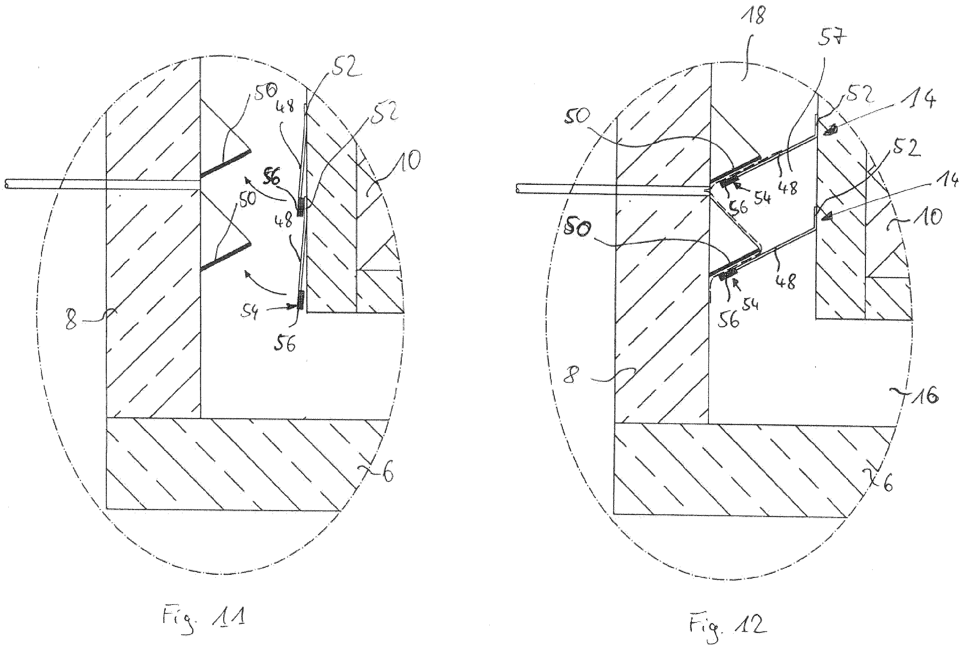

Fig. 11 zeigt zwei Dichtanordnungen 14 in einer alternativen Ausführungsform. Die Dichtanordnungen 14 weisen hier jeweils eine an der Schwungscheibe 10 angeordnete Dichtlippe 48 auf. Die Dichtlippen 48 weisen jeweils ein an der Schwungscheibe 10 festgelegtes erstes Ende 52 sowie ein weiteres Ende 54 auf. Das weitere Ende 54 kann aus einer Ruheposition durch eine im Betriebszustand der Schwungscheibe 10 wirkende Zentrifugalkraft in eine Dichtposition überführt werden, in der das weitere Ende 54 der Dichtlippe 48 mit einem korrespondierenden Dichtelement 50, die an der Wanne 4 angeordnet ist, in Kontakt tritt.

Fig. 12 zeigt die Dichtanordnungen 14 mit jeweils der Dichtlippe 48 im Betriebszustand des Energiespeichers 2. Am weiteren Ende 54 der Dichtlippe 48 sind Gewichte 56 angeordnet. Diese dienen dazu, die Dichtlippe 48 zu beschweren und im Betriebszustand des Energiespeichers 2 durch die Rotation der Schwungscheibe 10 wirkende Zentrifugalkraft zu erhöhen. Hierdurch wird eine erhöhte Dichtwirkung erzielt. Der Betriebszustand des Energiespeichers 2 zeichnet sich dabei durch eine Mindestumfangsgeschwindigkeit der Schwungscheibe 10 aus, die diese für einen Betrieb als Energiespeicher mindestens aufweisen muss. Die zwei Dichtanordnungen 14 sind voneinander beabstandet angeordnet und bilden zwischen sich im dargestellten Betriebszustand der Schwungscheibe 10 einen Raum 57 aus, in den durch eine Zuleitung ein Sperrmedium einbringbar ist. Das Sperrmedium wird hierbei bevorzugt mit einem Druck in den Raum 57 eingebracht, der über dem Druck im ersten Bereich 16 liegt. Ein Austreten von Fluid aus dem ersten Bereich 16 wird durch den Einsatz des Sperrmediums verhindert bzw. mindestens vermindert.

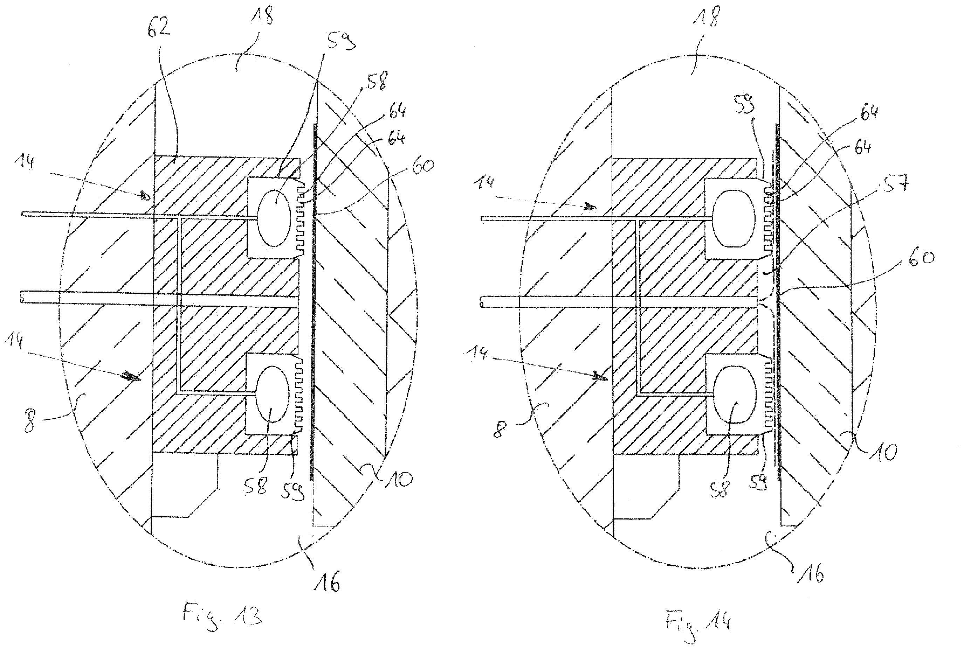

In Fig. 13 sind zwei der Dichtanordnungen 14 dargestellt. Jede der Dichtanordnungen 14 weist einen an der Wannenwandung 8 angeordneten umlaufenden Schlauch 58 auf. Dieser Schlauch 58 ist jeweils durch ein Fluid expandierbar. Durch das Expandieren des Schlauches 58 ist der Abstand zwischen Schlauch 58 und Schwungscheibe 10 einstellbar. Jede der Dichtanordnungen 14 weist eine an der Schwungscheibe 10 angeordnete Dichtfläche 60 sowie ein den Schlauch 58 aufnehmendes, an der Wannenwandung 8 angeordnetes Gehäuse 62 auf. Jeder der Schläuche 58 ist durch das Gehäuse 62 zumindest an seinen nicht zur Dichtfläche 60 weisenden Teilen der Schlauchoberfläche 59 in seiner Ausdehnung beschränkt. Die Gehäuse 62 weisen hier eine umlaufende Tasche auf, in die der Schlauch 58 jeweils eingebracht ist. Hierdurch ist der Schlauch 58 jeweils von drei Seiten in seiner Ausdehnung begrenzt. Bei Einführung eines Fluids zum Expandieren des Schlauches 58 kann der Schlauch 58 jeweils nur in Richtung der Schwungscheibe 10 expandieren. Die Schläuche 58 weisen an ihren der Dichtfläche 60 zugewandten Teilen der Schlauchoberfläche 59 umlaufende Lamellen 64 auf. Die Lamellen 64 sind bevorzugt aus einem abriebfesten und reibungsmindernden Material gefertigt. Die Lamellen 64 dienen dazu, die Kontaktfläche zwischen Schlauch 58 und Schwungscheibe 10 bei einem Kontakt zwischen Schwungscheibe 10 und Dichtanordnung 14 zu minimieren. Weiterhin stellen die Lamellen 64 ein Strömungshindernis für austretendes Fluid dar.

Fig. 14 zeigt die Dichtanordnungen 14 mit gegenüber der Darstellung in Fig. 13 expandierten Schläuchen 58 dar. Durch das Einbringen eines Fluids in die Schläuche 58 wird der Abstand zwischen den Lamellen 64 und der Dichtfläche 60 verringert und die Dichtwirkung der Dichtanordnung 14 erhöht. Die beiden Dichtanordnungen 14 bilden zwischen sich wiederum einen Raum 57 aus, in den ein Sperrmedium eingebracht werden kann. Dieses dient dazu, die Dichtwirkung weiter zu verbessern. Des Weiteren kann das Sperrmedium beim Vorbeiströmen an den Lamellen eine Schmierwirkung haben, durch die Reibung in der Dichtanordnung 14 vermindert wird. Zudem kann hierdurch Reibungswärme aus der Dichtanordnung 14 abtransportiert werden.

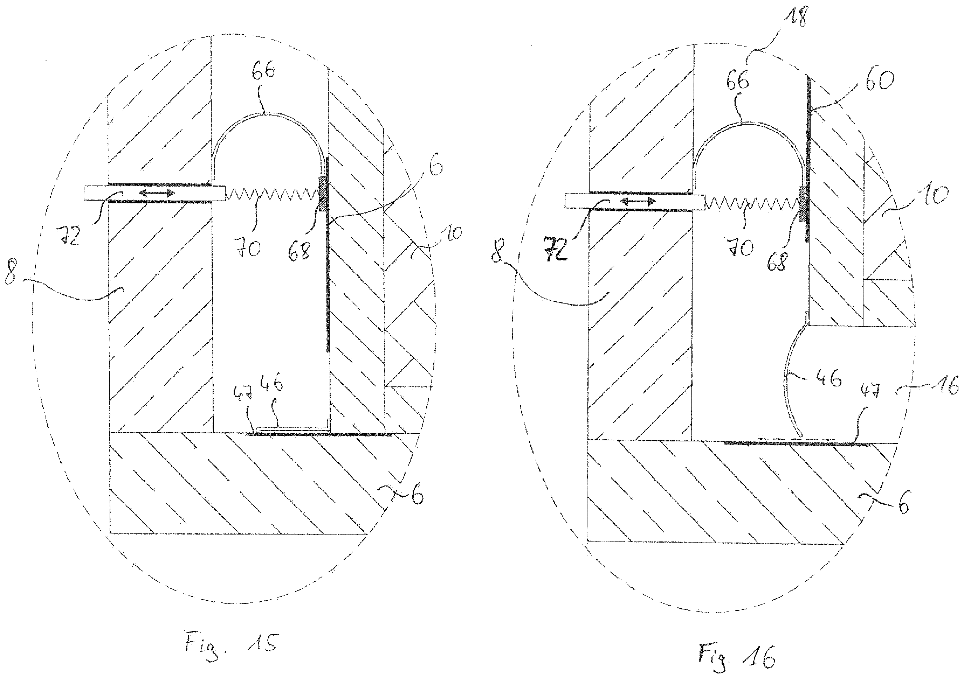

Fig. 15 zeigt eine Dichtanordnung 14 mit einer Trennschürze 66, die einenends an der Wannenwandung 8 der Wanne 4 festgelegt ist und anderenends eine Gleitplatte 68 aufweist, das mit einem an der Schwungscheibe 10 angeordneten Dichtareal 67 in Kontakt bringbar ist. Die Gleitplatte 68 ist über ein Federsystem 70 mit einer Kraft in Richtung des Dichtareals 67 beaufschlagbar. Die Kraft kann durch ein auf das Federsystem 70 wirkende Einstellvorrichtung 72 manuell oder hydraulisch eingestellt werden.

Fig. 16 zeigt die Dichtanordnung nach Fig. 15 in einem Zustand, in dem die Schwungscheibe 10 vom Wannenboden 6 abgehoben ist.

Fig. 17 zeigt eine Dichtanordnung 14 in Form eine Labyrinthdichtung 74. Die Labyrinthdichtung 74 umfasst einen an der Wannenwandung 8 festgelegten Wandteil 76 und einen an der Schwungscheibe 10 festgelegten Schwungscheibenteil 78. Der Wandteil 76 und der Schwungscheibenteil 78 weisen Stolperbünde 80 auf, die parallel zur Drehachse 12 der Schwungscheibe 10 verlaufen. Die Stolperbünde 80 sind miteinander in einen berührungslosen Eingriff bringbar. Im Wandteil 76 ist eine Leitung 82 für ein Sperrmedium angeordnet, dass zwischen die Stolperbünde 80 einbringbar ist. Die Laybrinythdichtung 74 ist ein Zustand bei auf den Wannenboden 6 abgesenkter Schwungscheibe 10 dargestellt.

Fig. 18 zeigt die Dichtanordnung 14 nach Fig. 17 mit einer vom Wannenboden 6 abgehobenen Schwungscheibe 10.

**Bezeichnungen**

| | | | |
|---|---|---|---|
| 2 | Energiespeicher | 46 | Dichtschürze |
| 4 | Wanne | 47 | Dichtungsfläche |
| 6 | Wannenboden | 48 | Dichtlippe |
| 8 | Wannenwandung | 50 | Dichtelement |
| 10 | Schwungscheibe | 52 | erstes Ende |
| 12 | Drehachse | 54 | weiteres Ende |
| 14 | Dichtanordnung | 56 | Gewicht |
| 16 | erster Bereich | 57 | Raum |
| 18 | weiterer Bereich | 58 | Schlauch |
| 20 | Fluidenergiemaschine | 59 | Schlauchoberfläche |
| 22 | automatische Auswuchtvorrich-tung | 60 | Dichtfläche |
| | | 62 | Gehäuse |
| 24 | Ausgleichsmasse | 64 | Lamellen |
| 26 | Führungssystem | 66 | Trennschürze |
| 28 | Vorratsbehälter | 67 | Dichtareal |
| 30 | Außenbehälter | 68 | Gleitelement |
| 32 | Führungs- und Dämpfungssystem | 70 | Federsystem |
| 34 | Kolben | 72 | Einstellvorrichtung |
| 36 | Dämpfungsanordnung | 74 | Labyrinthdichtung |
| 38 | Fluidzuführung | 76 | Wandteil |
| 40 | Gleitfläche | 78 | Schwungscheibenteil |
| 42 | Fluidzuleitung | 80 | Stolperbünde |
| 44 | Wälzkörper | 82 | Leitung |

## Patentansprüche

1. Energiespeicher (2), umfassend eine Wanne (4), die einen Wannenboden (6) und eine Wannenwandung (8) aufweist und in der eine Schwungscheibe (10) um eine vertikale Drehachse (12) rotierbar angeordnet ist, wobei mindestens eine Dichtanordnung (14) mindestens einen überwiegend an der dem Wannenboden (6) zugewandten Seite der Schwungscheibe (10) angeordneten ersten Bereich (16) von mindestens einem überwiegend auf der dem ersten Bereich (16) gegenüberliegenden Seite der Schwungscheibe (10) angeordnetem weiteren Bereich (18) abgrenzt und die Schwungscheibe (10) durch Anlegen einer Druckdifferenz zwischen dem ersten Bereich (16) und dem weiteren Bereich (18) mit einer die Schwungscheibe (10) vom Wannenboden (6) abhebenden Kraft beaufschlagbar ist, sowie eine Fluidenergiemaschine (20) zur Erzeugung der Druckdifferenz, **dadurch gekennzeichnet, dass** die Schwungscheibe (10) eine automatische Auswuchtvorrichtung (22) aufweist, die mindestens eine in radialer Richtung sowie in Rotationsrichtung der Schwungscheibe (10) positionierbare Ausgleichsmasse (24), ein Messsystem zur Detektion einer Unwucht sowie ein mit dem Messsystem verbundenes Steuerungssystem zur Ermittlung geeigneter Ausgleichspositionen und zur Steuerung der Positionierung der Ausgleichsmasse (24) umfasst.

2. Energiespeicher (2) nach Anspruch 1, **dadurch gekennzeichnet, dass** die Ausgleichsmasse (24) an einem relativ zur Schwungscheibe (10) um deren Drehachse (12) drehbar positionierbaren Führungssystem (26) festgelegt ist und die Ausgleichsmasse (24) entlang des Führungssystems (26) in radialer Richtung positionierbar ist.

3. Energiespeicher (2) nach Anspruch 1, **dadurch gekennzeichnet, dass** die Ausgleichsmasse (24) von einer Flüssigkeit gebildet ist, die zumindest teilweise von einem konzentrisch um die Drehachse (12) der Schwungscheibe (10) angeordneten Vorratsbehälter gezielt in einzelne über die Schwungscheibe verteilte, flüssigkeitsleitend mit dem Vorratsbehälter (28) verbundene Außenbehälter (30) verbringbar ist.

4. Energiespeicher (2) nach einem der vorherigen Ansprüche, **dadurch gekennzeichnet, dass** in der Wanne (4) über den Umfang verteilt Führungs- und Dämpfungssysteme (32) angeordnet sind, wobei die Führungs- und Dämpfungssysteme (32) je einen in Richtung der Schwungscheibe (10) verschiebbaren Kolben (34) aufweisen, der an seinem der Schwungscheibe (10) abgewandten Ende federnd gelagert ist und eine Dämpfungsanordnung (36) aufweist.

5. Energiespeicher (2) nach Anspruch 4, **dadurch gekennzeichnet, dass** die Dämpfungsanordnung (36) eine Fluidzuführung (38) aufweist, durch die die Dämpfung einstellbar ist.

6. Energiespeicher (2) nach einem der Ansprüche 4 oder 5, **dadurch gekennzeichnet, dass** der Kolben (34) an seinem der Schwungscheibe (10) zugewandten Ende eine Gleitfläche (40) aufweist.

7. Energiespeicher (2) nach Anspruch 6, **dadurch gekennzeichnet, dass** die Gleitfläche (40) über eine Fluidzuleitung (42) mit einem Fluid überströmbar ausgebildet ist.

8. Energiespeicher (2) nach einem der Ansprüche 4 oder 5, **dadurch gekennzeichnet, dass** der Kolben (34) an seinem der Schwungscheibe (10) zugewandten Ende einen drehbar gelagerten Wälzkörper (44) aufweist.

9. Energiespeicher (2) nach einem der vorhergehenden Ansprüche, **dadurch gekennzeichnet, dass** die Dichtanordnung (14) eine an der Schwungscheibe (10) festgelegte Dichtschürze (46) aufweist.

10. Energiespeicher (2) nach einem der vorhergehenden Ansprüche, **dadurch gekennzeichnet, dass** die Dichtanordnung (14) eine an der Schwungscheibe (10) angeordnete flexible Dichtlippe (48) und eine an der Wanne (4) angeordnete korrespondierendes Dichtelement (50) aufweist, wobei die Dichtlippe (48) ein erstes an der Schwungscheibe festgelegtes Ende (52) und ein weiteres Ende (54) aufweist, dass aus einer Ruheposition durch eine in einem Betriebszustand der Schwungscheibe (10) wirkende Zentrifugalkraft in eine Dichtposition überführbar ist, in der das weitere Ende (54) der Dichtlippe (48) mit dem Dichtelement (50) in Kontakt tritt.

11. Energiespeicher (2) nach Anspruch 10, wobei die Dichtlippe (48) mit dem weiteren Ende (54) in der Dichtposition in Form der Mantelfläche eines Kegelstumpfs ausgebildet ist.

12. Energiespeicher (2) nach einem der Ansprüche 10 oder 11, **dadurch gekennzeichnet, dass** das weitere Ende (54) der Dichtlippe (48) eine Beschwerung durch Gewichte (56) aufweist.

13. Energiespeicher (2) nach einem der vorhergehenden Ansprüche, **dadurch gekennzeichnet, dass** die Dichtanordnung (14) einen an der Wanne (4) angeordneten umlaufenden Schlauch (58) aufweist, wobei der Schlauch (58) durch ein Fluid expandierbar ist.

14. Energiespeicher (2) nach Anspruch 13, **dadurch gekennzeichnet, dass** die Dichtanordnung (14) eine an der Schwungscheibe (10) angeordnete Dichtfläche (60) und ein den Schlauch (58) aufnehmendes, an der Wanne (4) angeordnetes Gehäuse (62) aufweist, das den Schlauch (58) zumindest an seinen nicht zur Dichtfläche (60) weisenden Teilen der Schlauchoberfläche (59) in seiner Ausdehnung beschränkt.

15. Energiespeicher (2) nach einem der Ansprüche 13 oder 14, **dadurch gekennzeichnet, dass** der Schlauch an seinen der Dichtfläche (60) zugewandten Schlauchoberfläche (59) in Umfangsrichtung verlaufende, der Schwungscheibe zugewandte Lamellen (64) aufweist.

16. Energiespeicher (2) nach einem der vorstehenden Ansprüche, **dadurch gekennzeichnet, dass** die Dichtanordnung (14) eine einenends an der Wannenwandung (8) festgelegte Trennschürze (66) aufweist, an der anderenends eine Gleitplatte (68) festgelegt ist, wobei die Gleitplatte (68) in Kontakt mit einem an der Schwungscheibe (10) angeordneten Dichtareal (69) bringbar ist.

17. Energiespeicher (2) nach Anspruch 16, **dadurch gekennzeichnet, dass** die Gleitplattem (68) mit einer Kraft in Richtung des Dichtareals (69) beaufschlagbar ist.

18. Energiespeicher (2) nach Anspruch 17, **dadurch gekennzeichnet, dass** die auf die Gleitplatte (68) aufgebrachte Kraft über eine Einstellvorrichtung (72) regulierbar ist.

19. Energiespeicher (2) nach einem der vorhergehenden Ansprüche, **dadurch gekennzeichnet, dass** der Energiespeicher (2) wenigstens zwei der Dichtanordnungen (14) aufweist, die zu einander beabstandet angeordnet sind und zwischen denen im Betriebszustand der Schwungscheibe (10) ein Raum (57) ausgebildet ist, in den ein Sperrmedium einbringbar ist.

20. Energiespeicher (2) nach einem der vorhergehenden Ansprüche, **dadurch gekennzeichnet, dass** die Dichtanordnung (14) eine Labyrinthdichtung (74) mit einem an der Wanne (4) angeordnetem Wandteil (76) und einem an der Schwungscheibe (10) angeordnetem Schwungscheibenteil (78) aufweist, wobei der Wandteil (76) und der Schwungscheibenteil (78) jeweils parallel zur Drehachse (12) der Schwungscheibe (10) verlaufende Stolperbünde (80) aufweisen, die miteinander in berührungslosen Eingriff bringbar sind.

21. Energiespeicher (2) nach Anspruch 20, **dadurch gekennzeichnet, dass** zwischen die Stolperbünde (80) der Labyrinthdichtung (74) ein Sperrmedium einbringbar ist.

## Claims

1. Energy accumulator (2), comprising a tank (4), which has a tank floor (6) and a tank wall (8) and in which a flywheel (10) is arranged so as to be rotatable about a vertical axis of rotation (12), wherein at least one sealing assembly (14) delimits at least one first area (16) arranged predominantly on the side of the flywheel (10) facing the tank floor (6) from at least one further area (18) arranged predominantly on the side of the flywheel (10) opposite to the first area (16), and the flywheel (10) can be acted upon by applying a pressure difference between the first area (16) and the further area (18) with a force which lifts the flywheel (10) from the tank floor (6), and also a fluid energy machine (20) for generating the pressure difference, **characterised in that** the flywheel (10) has an automatic balancing device (22) which comprises at least one compensating mass (24) which can be positioned in the radial direction and also in the direction of rotation of the flywheel (10), a measuring system for detecting an imbalance and also a control system connected to the measuring system for determining suitable compensating positions and for controlling the positioning of the compensating mass (24).

2. Energy accumulator (2) according to claim 1, **characterised in that** the compensating mass (24) is fixed on a guide system (26) which can be positioned so as to be rotatable about its axis of rotation (12) relative to the flywheel (10), and the compensating mass (24) can be positioned along the guide system (26) in the radial direction.

3. Energy accumulator (2) according to claim 1, **characterised in that** the compensating mass (24) is formed of a liquid which can be brought at least partially from a storage container arranged concentrically about the axis of rotation (12) of the flywheel (10) in a targeted way into individual outer containers (30), which carry liquid, distributed over the flywheel and connected to the storage container (28).

4. Energy accumulator (2) according to any one of the preceding claims, **characterised in that** guide and damping systems (32) are arranged distributed over the circumference in the tank (4), wherein the guide and damping systems (32) each have a piston (34) which can be displaced in the direction of the flywheel (10) and is spring-mounted at its end facing away from the flywheel (10) and has a damping assembly (36).

5. Energy accumulator (2) according to claim 4, **characterised in that** the damping assembly (36) has a fluid supply (38), by means.of which the damping can be adjusted.

6. Energy accumulator (2) according to any one of claims 4 or 5, **characterised in that** the piston (34) has, at its end facing the flywheel (10), a sliding surface (40).

7. Energy accumulator (2) according to claim 6, **characterised in that** the sliding surface (40) is formed such that a fluid can flow over it via a fluid supply line (42) .

8. Energy accumulator (2) according to any one of claims 4 or 5, **characterised in that** the piston (34) has, at its end facing the flywheel (10), a rotatably mounted rolling body (44) .

9. Energy accumulator (2) according to any one of the preceding claims, **characterised in that** the sealing assembly (14) has a sealing apron (46) fixed on the flywheel (10).

10. Energy accumulator (2) according to any one of the preceding claims, **characterised in that** the sealing assembly (14) has a flexible sealing lip (48) arranged on the flywheel (10) and a corresponding sealing element (50) arranged on the tank (4), wherein the sealing lip (48) has a first end (52) fixed on the flywheel and a further end (54) that can be converted from a resting position by a centrifugal force acting in an operating state of the flywheel (10) to a sealing position, in which the further end (54) of the sealing lip (48) comes into contact with the sealing element (50).

11. Energy accumulator (2) according to claim 10, wherein the sealing lip (48) is formed with the further end (54) in the sealing position in the form of the lateral surface of a truncated cone.

12. Energy accumulator (2) according to any one of claims 10 or 11, **characterised in that** the further end (54) of the sealing lip (48) has a weighting by means of weights (56).

13. Energy accumulator (2) according to any one of the preceding claims, **characterised in that** the sealing assembly (14) has a circumferential hose (58) arranged on the tank (4), wherein the hose (58) can be expanded by a fluid.

14. Energy accumulator (2) according to claim 13, **characterised in that** the sealing assembly (14) has a sealing surface (60) arranged on the flywheel (10) and a housing (62) which accommodates the hose (58) and is arranged on the tank (4) and which limits the extent of the hose (58) at least on its parts of the hose surface (59) not pointing to the sealing surface (60).

15. Energy accumulator (2) according to any one of claims 13 or 14, **characterised in that** the hose has, on its hose surface (59) facing the sealing surface (60), lamellae (64) extending in the circumferential direction and facing the flywheel.

16. Energy accumulator (2) according to any one of the preceding claims, **characterised in that** the sealing assembly (14) has a separating apron (66) which is fixed at one end to the tank wall (8) and on which a sliding plate (68) is fixed at the other end, wherein the sliding plate (68) can be brought into contact with a sealing area (69) arranged on the flywheel (10).

17. Energy accumulator (2) according to claim 16, **characterised in that** the sliding plate (68) can be acted upon by a force in the direction of the sealing area (69).

18. Energy accumulator (2) according to claim 17, **characterised in that** the force applied to the sliding plate (68) can be regulated with an adjusting device (72).

19. Energy accumulator (2) according to any one of the preceding claims, **characterised in that** the energy accumulator (2) has at least two of the sealing assemblies (14), which are arranged at a distance from one another and between which, in the operating state of the flywheel (10), a space (57) is formed into which a locking medium can be introduced.

20. Energy accumulator (2) according to any one of the preceding claims, **characterised in that** the sealing assembly (14) has a labyrinth seal (74) with a wall part (76) arranged on the tank (4) and a flywheel part (78) arranged on the flywheel (10), wherein the wall part (76) and the flywheel part (78) each have lug collars (80) which run parallel to the axis of rotation (12) of the flywheel (10) and can be brought into engagement with one another in a contactless manner.

21. Energy accumulator (2) according to claim 20, **characterised in that** a locking medium can be introduced between the lug collars (80) of the labyrinth seal (74).

## Revendications

1. Accumulateur d'énergie (2), comprenant une cuve (4), laquelle présente un fond de cuve (6) et une paroi de cuve (8) et dans laquelle un volant d'inertie (10) est disposé de manière à pouvoir tourner autour d'un axe de rotation vertical (12), dans lequel au moins un ensemble d'étanchéité (14) sépare au moins une première zone (16) disposée principalement sur le côté du volant d'inertie (10) tourné vers le fond de cuve (6) d'au moins une autre zone (18) disposée principalement sur le côté du volant d'inertie (10) opposé à la première zone (16) et le volant d'inertie (10) peut être soumis à une force soulevant le volant d'inertie (10) du fond de cuve (6) par application d'une différence de pression entre la première zone (16) et l'autre zone (18), ainsi qu'une machine à énergie fluidique (20) destinée à générer la différence de pression, **caractérisé en ce que** le volant d'inertie (10) présente un dispositif d'équilibrage automatique (22) qui comprend au moins une masse de compensation (24) pouvant être positionnée dans la direction radiale et dans le sens de rotation du volant d'inertie (10), un système de mesure destiné à la détection d'un balourd ainsi qu'un système de commande relié au système de mesure et destiné à déterminer des positions de compensation appropriées et à commander le positionnement de la masse de compensation (24).

2. Accumulateur d'énergie (2) selon la revendication 1, **caractérisé en ce que** la masse de compensation (24) est fixée sur un système de guidage (26) pouvant être positionné de manière rotative par rapport au volant d'inertie (10) autour de son axe de rotation (12) et la masse de compensation (24) peut être positionnée dans la direction radiale le long du système de guidage (26).

3. Accumulateur d'énergie (2) selon la revendication 1, **caractérisé en ce que** la masse de compensation (24) est formée par un fluide qui peut être transféré de manière ciblée au moins en partie depuis un réservoir de stockage disposé de manière concentrique autour de l'axe de rotation (12) du volant d'inertie (10) jusque dans des réservoirs extérieurs (30) individuels reliés au réservoir de stockage (28) de manière à diriger le fluide de manière répartie sur le volant d'inertie.

4. Accumulateur d'énergie (2) selon une des revendications précédentes, **caractérisé en ce que** des systèmes de guidage et d'amortissement (32) sont disposés dans la cuve (4) de manière répartie sur la périphérie, dans lequel les systèmes de guidage et d'amortissement (32) présentent chacun un piston (34) qui est mobile dans la direction du volant d'inertie (10) et qui est monté sur ressort à son extrémité opposée au volant d'inertie (10) et présente un ensemble d'amortissement (36).

5. Accumulateur d'énergie (2) selon la revendication 4, **caractérisé en ce que** l'ensemble d'amortissement (36) présente une alimentation en fluide (38) qui permet de régler l'amortissement.

6. Accumulateur d'énergie (2) selon une des revendications 4 ou 5, **caractérisé en ce que** le piston (34) présente une surface de glissement (40) à son extrémité tournée vers le volant d'inertie (10) .

7. Accumulateur d'énergie (2) selon la revendication 6, **caractérisé en ce que** la surface de glissement (40) est réalisée de manière à ce qu'un fluide puisse être déversé par le biais d'une arrivée de fluide (42).

8. Accumulateur d'énergie (2) selon une des revendications 4 ou 5, **caractérisé en ce que** le piston (34) présente un corps de cylindre (44) monté rotatif à son extrémité tournée vers le volant d'inertie (10).

9. Accumulateur d'énergie (2) selon une des revendications précédentes, **caractérisé en ce que** l'ensemble d'étanchéité (14) présente un tablier d'étanchéité (46) fixé sur le volant d'inertie (10).

10. Accumulateur d'énergie (2) selon une des revendications précédentes, **caractérisé en ce que** l'ensemble d'étanchéité (14) présente une lèvre d'étanchéité flexible (48) disposée sur le volant d'inertie (10) et un élément d'étanchéité correspondant (50) disposé sur la cuve (4), dans lequel la lèvre d'étanchéité (48) présente une première extrémité (52) fixée sur le volant d'inertie et une autre extrémité (54) qui peut être transférée sous l'effet d'une force centrifuge agissant dans un état de fonctionnement du volant d'inertie (10), depuis une position de repos jusque dans une position d'étanchéité dans laquelle l'autre extrémité (54) de la lèvre d'étanchéité (48) vient en contact avec l'élément d'étanchéité (50).

11. Accumulateur d'énergie (2) selon la revendication 10, dans lequel la lèvre d'étanchéité (48) est réalisée avec l'autre extrémité (54) dans la position d'étanchéité sous la forme d'une surface de revêtement d'un cône tronqué.

12. Accumulateur d'énergie (2) selon une des revendications 10 ou 11, **caractérisé en ce que** l'autre extrémité (54) de la lèvre d'étanchéité (48) présente un lestage par des poids (56).

13. Accumulateur d'énergie (2) selon une des revendications précédentes, **caractérisé en ce que** l'ensemble d'étanchéité (14) présente un tuyau flexible périphérique (58) disposé sur la cuve (4), dans lequel le tuyau flexible (58) peut être dilaté par un fluide.

14. Accumulateur d'énergie (2) selon la revendication 13, **caractérisé en ce que** l'ensemble d'étanchéité (14) présente une surface d'étanchéité (60) disposée sur le volant d'inertie (10) et un boîtier (62) qui reçoit le tuyau flexible (58) et est disposé sur la cuve (4) et qui délimite le tuyau flexible (58) dans sa dilatation au moins au niveau de ses parties de surface de flexible (59) qui ne sont pas en regard de la surface d'étanchéité (60).

15. Accumulateur d'énergie (2) selon une des revendications 13 ou 14, **caractérisé en ce que** le tuyau flexible présente des lamelles (64) tournées vers le volant d'inertie et s'étendant dans la direction périphérique sur sa surface de flexible (59) tournée vers la surface d'étanchéité (60).

16. Accumulateur d'énergie (2) selon une des revendications précédentes, **caractérisé en ce que** l'ensemble d'étanchéité (14) présente un tablier de séparation (66) fixé d'un côté à la paroi de cuve (8) et sur lequel à l'autre extrémité est fixée une plaque de glissement (68), dans lequel la plaque de glissement (68) peut être amenée en contact avec une zone d'étanchéité (69) disposée sur le volant d'inertie (10).

17. Accumulateur d'énergie (2) selon la revendication 16, **caractérisé en ce que** la plaque de glissement (68) peut être soumise à une force dans la direction de la zone d'étanchéité (69) .

18. Accumulateur d'énergie (2) selon la revendication 17, **caractérisé en ce que** la force appliquée sur la plaque de glissement (68) peut être régulée par le biais d'un dispositif de régulation (72).

19. Accumulateur d'énergie (2) selon une des revendications précédentes, **caractérisé en ce que** l'accumulateur d'énergie (2) présente au moins deux des ensembles d'étanchéité (14) qui sont disposés de manière distante l'un par rapport à l'autre et entre lesquels, dans l'état de fonctionnement du volant d'inertie (10), un espace (57) est réalisé dans lequel peut être introduit un milieu de blocage.

20. Accumulateur d'énergie (2) selon une des revendications précédentes, **caractérisé en ce que** l'ensemble d'étanchéité (14) présente un joint en labyrinthe (74) avec une partie de paroi (76) disposée sur la cuve (4) et une partie de volant d'inertie (78) disposée sur le volant d'inertie (10), dans lequel la partie de paroi (76) et la partie de volant d'inertie (78) présentent respectivement des colliers de butée (80) s'étendant parallèlement à l'axe de rotation (12) du volant d'inertie (10) et qui peuvent être amenés à venir s'appliquer les uns sur les autres sans contact.

21. Accumulateur d'énergie (2) selon la revendication 20, **caractérisé en ce que**, entre les colliers de butée (80) du joint à labyrinthe (74), un milieu de blocage peut être introduit.
